# EUROPEAN PATENT SPECIFICATION

(11) **EP 1 615 498 B1**
(45) Date of publication and mention of the grant of the patent: **17.12.2008**
(21) Application number: 04749549.4
(22) Date of filing: 31.03.2004
(51) Int. Cl.: A01N 25/32, A01N 53/00

(54) **PEST CONTROL FORMULATION AND DISPENSER**
SCHÄDLINGSBEKÄMPFUNGSFORMULIERUNG UND ABGABEVORRICHTUNG
PREPARATION ANTIPARASITAIRE ET APPAREIL DE DISTRIBUTION ASSOCIE

(30) Priority: 31.03.2003 US 459105 P; 22.03.2004 US 805883
(43) Date of publication of application: 18.01.2006
(73) Proprietor: Sergeant's Pet Care Products, Omaha, Nebraska 68130-1703 (US)
(72) Inventor: KELLEY, Donald W., Athens, Texas 75751 (US)
(74) Representative: Hirsch & Associés
(86) International application number: PCT/US2004/009760
(87) International publication number: WO 2004/089083

(56) References cited:
- WO-A-20/04086862
- US-A- 4 160 335
- US-A- 5 437 869

## Description

The present invention relates to a liquid pest control composition which includes a pest control active ingredient and isodiphenyl phosphate as a carrier for the active ingredient. The system releases the active ingredient efficiently and uniformly. The pest control system is less irritating to the animal's skin as compared to prior art systems. The system is useful for making animal collars, ear tags, pest strips, liquid spot-on treatments, and the like.

### BACKGROUND OF THE INVENTION

Many pest control active ingredients cause irritation (parasthesia) to warm blooded animals (including humans). This irritation to the skin and/or eyes of warm blooded animals hampers the use of pest control active ingredients. This irritation factor occurs even when the pest control active ingredient is blended with polymers or in other formulations (such as granules, dusts, dips, liquids, emulsions, etc.) wherein the active ingredient is considerably diluted.

U.S. Pat. No. 5,437,869 describes the use of triphenyl phosphate, a solid at room temperature, to reduce these phenomena. The more irritating the active, the higher the ratio of TPP is required. These ratios of TPP to active may be incorporated into a solid. However, when a liquid pest control system is required, a problem arises when a high level of active ingredient is also required. Due to the solubility characteristics of TPP, a high percentage of highly irritating active does not leave room for a high ratio of TPP. Even a one-to-one ratio cannot be achieved in a liquid product and remain stable when a high level of active ingredient is required. Additionally, in some applications it is desired to utilize a high level, up to sixty percent (60%), of active ingredient and remain as a liquid in order to minimize the dose amount used in an application. An animal spot-on product is an example of a need for a small dose amount measured in drops.

### SUMMARY OF THE INVENTION

The present invention is directed to a method and a composition for the controlled delivery of a pest control active agent or a mixture of active agents while reducing the irritation of the pest control active agent to warm blooded animals. More particularly, the pest control system of the invention comprises a pest control formulation comprising a pest control active agent and isodiphenyl phosphate (IDPP) as a carrier for the active agent. The formulation may optionally include other ingredients as necessary or desired, depending on the particular active agent chosen and the form of the final product. Such optional ingredients can include, but are not limited to, system carriers such as polymers, clays, water, solvents, and the like; plasticizers; synergists; fragrances; coloring agents; preservatives; antioxidants; light stabilizers; and the like. The resulting pest control system may take the form of a solid, such as a polymer, granule, powder or dust; a liquid, such as a dip, a spray, or a spot-on; or an emulsion.

The present invention is further directed to a method for reducing the irritation to warm blooded animals of a liquid pest control active agent in a solid or liquid pest control system formulation, the method comprising incorporating isodiphenyl phosphate (IDPP) into the pest control formulation in an amount effective to reduce the irritation of the active agent to warm blooded animals.

The system of the invention provides a non-paresthesia producing stable formulation that may include a high percentage of the irritating active agent. This invention further allows for a high percentage of active agent, such as pyrethrins and synthetic pyrethroids, in a stable liquid formulation, while reducing any irritation of the active agent. The system of the invention is effective without loss of the biological activity of the active agent. This invention is particularly useful for reducing the irritation of pyrethrins and synthetic pyrethroids to warm blooded animals.

### DETAILED DESCRIPTION OF THE INVENTION

As used herein, "a" and "an" mean one or more, unless otherwise indicated.

"Parasthesia" as used herein and in the appended claims is defined as primarily a condition that results in a feeling (burning, tingling, and/or pricking sensation) of the skin.

Isodiphenyl phosphate (IDPP) is a liquid, is insoluble in water, has a low vapor pressure and is also heavier than water, which allows a formulation to become water-resistant after the water (if any) has evaporated. It is compatible with high concentrations (that is, of up to about 60% or more) of liquid active agents, including synthetic pyrethroids.

The pest control active agent may be chosen from any active agent known to be useful in the control of insect or acarid pests, such as but not limited to pyrethrins, natural or synthetic pyrethroids, carbamates, phosphates, phosphorothioates, etc. and mixtures thereof. The present invention is particularly useful for delivering pest control active agents that cause paresthesia in warm blooded animals, although the invention is not limited thereto. Synthetic pyrethroids are well-known to be irritating to animals. Thus, in one embodiment of the present invention, the pest control active agents are selected from pyrethroids. However, any active agent that causes paresthesia in animals is included within the present invention. The active agents may be liquids or solids at room temperature. While the invention is particularly useful for delivering liquid active agents at high concentrations in the formulation, the invention is not limited thereto but may also be used with active agents, either liquid or solid, at any concentration. One or more active agents may be included within the formulation of the present invention. Exemplary pesticides and repellents which are effective against horn flies, face flies, stable flies, house flies, mosquitoes, lice, ticks, and mites are carbaryl, propoxur, dichlorvos, naled, diazinon, pyrethrin, cypermethrin, decamethrin, cyhalothrin, flumethrin, cyfluthrin, fenvalerate, deltamethrin, fempropathrin, fluvalinate, flucythrinate, cyfluthrin, alphamethrin, tralomethrin, cycloprothrin, karate, gokilaht, or any synthetic pyrethroid with a cyano group in it's molecular structure and mixtures thereof. Preferred pest control active agents are the pyrethrins and synthetic pyrethroids. Many of these active ingredients are effective both as a pesticide and a repellent, and the activity of many is enhanced by the inclusion of a synergist. Especially preferred synergists include piperonyl butoxide and N-octyl bicycloheptene dicarboximide.

The active agent and the IDPP are mixed together at a predetermined ratio. By combining IDPP with the pest control active agent, the irritation to the skin and/or eyes of the active agent to warm blooded animals (including humans) is reduced. This property of the present invention is particularly useful for reducing the irritation of synthetic pyrethroids to warm blooded animals. The amount of IDPP in the formulation relative to the amount of active agent will be an amount effective to reduce the irritation caused by the active agent. The effective amount is easily determinable by routine experimentation. Generally, the amount of IDPP in the formulation should be at least equal to the amount of active agent and, often, the amount of IDPP in the formulation is double to many times the amount of active agent in the formulation in order to reduce the irritation value of the active agent. Thus, the ratio of IDPP:active agent is normally from about 1:1 to about 99:1.

To prepare pest control systems according to the invention, the pest control active agent and the IDPP are mixed together to form an active agent/carrier blend. This blend is then mixed with other ingredients as necessary or desired, depending on the particular active agent chosen and the form and intended use of the final product. The resulting blend is then processed (and, if necessary, extruded or otherwise shaped) into the desired pest control system.

For example, if the pest control system is a shaped polymeric article (such as an animal collar, an ear tag, or a pest strip, for example), a polymer or copolymer conventionally employed in such articles (such as polymers and copolymers of vinyl monomers such as polyvinyl chloride, polyvinyl acetate, polyacrylates or the like, or other powdered polymers or copolymers) is blended with plasticizers and/or stabilizers as necessary, as are known in the art or can be determined without undue experimentation. The active agent / IDPP blend is added to the polymer blend and mixed until a dry free-flowing mix is obtained. Depending on the polymer chosen, it may require a common practice of heating the polymer to expand the particle so as to accept the active agent / IDPP blend and remain a dry free-flowing blend. This mix is then fused together into the desired shape by extruding or molding at the proper temperature and pressure by standard methods known in the art.

When the pest control system is a dust or powder, for example, the pest control active agent / IDPP blend is mixed together with and incorporated into (such as by absorption or adsorption) the appropriate mineral or cellulosic substrate carrier. The carrier may be selected from talc, waxes, corn starch, silica and silica derivatives, clay, diatomaceous earth, corn cob, peanut hulls, paper, and the like, as are known in the art.

When a liquid pest control system is prepared, the pest control active agent / IDPP blend is mixed together with a suitable organic solvent, an aqueous solvent, or mixtures thereof. The liquid carrier is chosen such that the active agent and the IDPP will remain associated together as a group in the resulting system, which can be determined by those skilled in the art without undue experimentation.

The following examples illustrate the practice of the present invention. Parts are given as percentages and temperature in degrees Fahrenheit unless otherwise noted. "RT" is room temperature.

### EXAMPLES

### EXAMPLE 1:

For purposes of evaluation of the discovery of this invention and to assist in determining the correct ratios of active agent to IDPP, the following screening procedure was set up:
1. Different ratios of active ingredient to IDPP were prepared for evaluation.
2. A one-gram drop of the ratio was placed on human skin. Only one drop was evaluated within a 24-hour period.
3. Irritation or sensitivity values were assigned according to the following scale ("Parasthesia Irritation Rating" or "PIR"):
   - 12 = Severe
   - 8 = Noticeable discomfort
   - 4 = Slight discomfort
   - 0 = No discomfort
4. If irritation was severe or noticeable at any time within the 24-hour period, the skin was washed and 5% lidocaine solution was applied to lessen discomfort.

The following active agents in combination with IDPP were evaluated according to the above procedure, to demonstrate the discovery of the present invention.

| | Ratios | | | | | |
|---|---|---|---|---|---|---|
| Cypermethrin | 0.67 | 0.43 | 0.33 | 0.25 | 0.21 | 0.18 |
| Isodiphenyl Phosphate (IDPP) | 1.00 | 1.00 | 1.00 | 1.00 | 1.00 | 1.00 |
| Parasthesia Irritation Rating | 12.00 | 12.00 | 12.00 | 4.00 | 0.00 | 0.00 |

| | Ratios | | | |
|---|---|---|---|---|
| Cyphenothrin | 1.00 | 1.50 | 1.00 | 0.67 |
| Isodiphenyl Phosphate (IDPP) --- | 1.00 | 1.00 | 1.00 | |
| Parasthesia Irritation Rating | 12.00 | 4.00 | 0.00 | 0.00 |

When formulating, each individual formulation must be evaluated for irritation due to the influence of different actives, additional ingredients (solvents, surfactants, and the like) and/or forms (solids, liquids, dust, emulsion, and the like).

### EXAMPLE 2:

A Ready-To-Use (RTU) liquid horse spray for flies was prepared by mixing together the following ingredients:

| Ingredient | Amt. (wt%) |
|---|---|
| Cypermethrin | 1.00 |
| Isodiphenyl Phosphate (IDPP) | 5.00 |
| Pemulen TR-2 | 0.20 |
| Ammonia Hydroxide 27% | 0.03 |
| Isopropyl Alcohol | 21.20 |
| Deionized Water | 72.57 |

| | |
|---|---|
| Pemulen TR-2 is a polymeric emulsifier made by Noveon, Inc. | |

Following the procedure of Example 1, the above formulation was tested for irritation. The PIR was 0.0.

### EXAMPLE 3:

A Ready-To-Use (RTU) liquid spot-on for flies was prepared by mixing together the following ingredients:

| Ingredient | Amt. (wt%) |
|---|---|
| Gokilaht Technical | 42.83 |
| Nylar Technical | 2.10 |
| Isodiphenyl Phosphate (IDPP) | 55.07 |

| | |
|---|---|
| Gokilaht (d-cyphenothrin; synthetic pyrethroid) Technical -- MGK Company. Nylar^{®} insect growth regulator comprises approximately 50% by weight pyriproxyfen and approximately 50% by weight corn oil and is available from MGK Company. | |

Following the procedure of Example 1, the above formulation was tested for irritation. The PIR was 0.0.

### EXAMPLE 4:

A dust for cattle horn fly was prepared by mixing together the following ingredients:

| Ingredient | Amt. (wt%) |
|---|---|
| Cypermethrin Technical | 1.00 |
| Isodiphenyl Phosphate (IDPP) | 5.00 |
| Calcium Silicate | 19.40 |
| Kaolin | 74.60 |

Following the procedure of Example 1, the above formulation was tested for irritation. The PIR was 0.0.

### EXAMPLE 5:

A Ready-To-Use (RTU) powder spot-on for small animals for control of external parasites, e.g. fleas and ticks, was prepared by mixing together the following ingredients:

| Ingredient | Amt. (wt%) |
|---|---|
| Poly Pore L-200 | 40.00 |
| Deltamethrin | 30.00 |
| Isodiphenyl Phosphate (IDPP) | 30.00 |

| | |
|---|---|
| Poly Pore L-200 is a polyacrylate made by Chemdal Corporation Palatine, IL. | |

Following the procedure of Example 1, the above formulation was tested for irritation. The PIR was 0.0.

### EXAMPLE 6:

A solid dog collar for fleas and ticks was prepared by mixing together the following ingredients:

| Ingredient | Amt. (wt%) |
|---|---|
| Polyvinyl Chloride (PVC) | 50.00 |
| Stabilizer (Witco CZ19A) | 0.50 |
| Epoxidized Soybean Oil | 5.00 |
| Deltamethrin Tech., 98.4% | 4.00 |
| Isodiphenyl Phosphate (IDPP) | 40.50 |

Following the procedure of Example 1, the above formulation was tested for irritation. The PIR was 0.0.

The formulation was blended by charging a ribbon blender with the PVC, stabilizer, and soybean oil, heating to about 150° F (65.5° C), and blending until a dry and flowable blend was obtained. IDPP and deltamethrin were blended together and heated until deltamethrin went into solution. This solution was added to the PVC blend and blended until it was dry and flowable. The batch was extruded at about 300° F (149° C) into collars of a size suitable for use on dogs.

### EXAMPLE 7:

A Ready-To-Use (RTU) liquid spray/wipe for large or small animals was prepared by mixing together the following ingredients:

| Ingredient | Amt. (wt%) |
|---|---|
| Beta Cyfluthrin | 1.00 |
| Isodiphenyl Phosphate (IDPP) | 99.00 |

Following the procedure of Example 1, the above formulation was tested for irritation. The PIR was 0.0.

### EXAMPLE 8:

A Ready-To-Use (RTU) liquid spray/wipe for large or small animals was prepared by mixing together the following ingredients:

| Ingredient | Amt. (wt%) |
|---|---|
| Beta Cyfluthrin | 1.00 |
| Isodiphenyl Phosphate (IDPP) | 20.00 |
| Pemulen TR-2 | 0.20 |
| Ammonium hydroxide 28% | 0.03 |
| Isopropyl alcohol 99% | 21.00 |
| Deionized water | 54.77 |
| Foraperle 303 | 3.00 |

| | |
|---|---|
| Foraperle 303 is a fluoropolymer made by DuPont. | |

The water and isopropyl alcohol were mixed together, after which the Pemulen TR-2 was added and allowed to hydrate. The ammonium hydroxide was added to partially neutralize the Pemulen.

The beta cyfluthrin and IDPP were mixed together and added, with good agitation, to the above mixture. After the mixture was blended, the Foraperle was added and mixed in.

Following the procedure of Example 1, the above formulation was tested for irritation. The PIR was 0.0.

### EXAMPLE 9:

A concentrate to be applied to the soil as a termicide was prepared by mixing together the following ingredients:

| Ingredient | Amt. (wt%) |
|---|---|
| Cyphenothrin | 25.00 |
| Isodiphenyl Phosphate (IDPP) | 25.00 |
| Pemulen TR-2 | 0.30 |
| Ammonium hydroxide 28% | 0.03 |
| Deionized water | 49.67 |

The Pemulen was hydrated in the water and partially neutralized with the ammonium hydroxide. The cyphenothrin and IDPP were blended together and added to the water phase while using good agitation to yield the liquid termicide concentrate.

Following the procedure of Example 1, the above formulation was tested for irritation. The PIR was 0.0.

Using one part of the above concentrate to 25 parts of water gives a dilution that is then applied to the soil as a drench.

## Claims

1. A liquid pest control composition comprising a pest control active agent and isodiphenyl phosphate, wherein the isodiphenyl phosphate is present in an amount effective to reduce the paresthesia caused by the active agent.

2. The liquid pest control composition according to claim 1 additionally comprising other ingredients selected from the group consisting of organic solvents, aqueous solvents, and mixtures thereof.

3. Use of the liquid pest control composition according to claim 1 or 2 as a dip, a spray, a spot on, or an emulsion.

4. The liquid pest control composition according to any one of claims 1 to 3 wherein the active agent is selected from the group consisting of pyrethrins, natural pyrethroids, synthetic pyrethroids, carbamates, phosphates, phosphorothioates and mixtures thereof.

5. The liquid pest control composition according to claim 4 wherein the active agent is selected from the group consisting of pyrethrins and synthetic pyrethroids.

6. The liquid pest control composition according to any one of claims 1 to 5 wherein the active agent is selected from the group consisting of carbaryl, propoxur, dichlorvos, naled, diazinon, pyrethrin, cypermethrin, decamethrin, cyhalothrin, flumethrin, cyfluthrin, fenvalerate, deltamethrin, fempropathrin, fluvalinate, flucythrinate, alphamethrin, tralomethrin, cycloprothrin, karate, gokilaht, any synthetic pyrethroid with a cyano group in it's molecular structure and mixtures thereof.

7. The liquid pest control composition according to any one of claims 1 to 6 wherein the amount of isodiphenyl phosphate is at least equal in parts to the amount of active agent.

8. The liquid pest control composition according to any one of claims I to 7 wherein the amount of active agent is at least 60 weight % of the pest control composition.

9. The liquid pest control composition according to any one of claims 1 to 8, comprising a synergist selected from the group consisting of piperonyl butoxide, N-octyl bicyclopheptene dicarboximide and mixtures thereof.

10. The liquid pest control composition according to any one of claims 1 to 9 wherein the amount of isodiphenyl phosphate is at least double in parts of the amount of active agent.

11. The liquid pest control composition according to any one of claims 1 to 10 wherein the ratio of isodiphenyl phosphate to active agent is from 1:1 to 99:1.

12. A pest control composition according to claim 11, comprising a synthetic pyrethroid and isodiphenyl phosphate, wherein the ratio of isodiphenyl phosphate to synthetic pyrethroid is from 1:1 to 99:1.

13. The method for reducing the irritation to the skin of warm blooded animals of a pest control active agent using the liquid pest control composition of any one of claims 1 to 12.

14. A method for reducing the irritation to the skin of warm blooded animals of a pest control active agent according to claim 13, the method comprising :
mixing a pest control active agent and a isodiphenyl phosphate to form a preblended liquid composition wherein the isodiphenyl phosphate reduces the irritation of the active agent.

15. The method according to claim 14 wherein the amount of isodiphenyl phosphate is at least equal in parts to the amount of active agent.

16. The method according claim 14 or 15 wherein the ratio of isodiphenyl phosphate to active agent is from 1:1 to 99:1.

17. The method according to any one of claims 14 to 16 wherein the active agent is selected from the group consisting of pyrethrins and synthetic pyrethroids.

## Patentansprüche

1. Flüssige Schädlingsbekämpfungszusammensetzung, umfassend einen Schädlingsbekämpfungswirkstoff und Isodiphenylphosphat, wobei das Isodiphenylphosphat in einer wirksamen Menge vorhanden ist, um die Parästhesie zu verringern, die durch den Wirkstoff verursacht wird.

2. Flüssige Schädlingsbekämpfungszusammensetzung nach Anspruch 1, zusätzlich umfassend andere Inhaltsstoffe, die ausgewählt sind aus der Gruppe bestehend aus organischen Lösemitteln, wässerigen Lösemitteln und Gemischen davon.

3. Verwendung der flüssigen Schädlingsbekämpfungszusammensetzung nach Anspruch 1 oder 2 als Dip, Spray, Spot-on oder Emulsion.

4. Flüssige Schädlingsbekämpfungszusammensetzung nach einem der Ansprüche 1 bis 3, wobei der Wirkstoff ausgewählt ist aus der Gruppe bestehend aus Pyrethrinen, natürlichen Pyrethroiden, synthetischen Pyrethroide, Carbamaten, Phosphaten, Phosphorothioaten und Gemischen davon.

5. Flüssige Schädlingsbekämpfungszusammensetzung nach Anspruch 4, wobei der Wirkstoff ausgewählt ist aus der Gruppe bestehend aus Pyrethrinen und synthetischen Pyrethroiden.

6. Flüssige Schädlingsbekämpfungszusammensetzung nach einem der Ansprüche 1 bis 5, wobei der Wirkstoff ausgewählt ist aus der Gruppe bestehend aus Carbaryl, Propoxur, Dichlorvos, Naled, Diazinon, Pyrethrin, Cypermethrin, Decamethrin, Cyhalothrin, Flumethrin, Cyfluthrin, Fenvalerat, Deltamethrin, Fempropathrin, Fluvalinat, Flucythrinat, Alphamethrin, Tralomethrin, Cycloprothrin, Karate, Gokilaht, einem synthetischen Pyrethroid mit einer Cyangruppe in seiner Molekularstruktur und Gemischen davon.

7. Flüssige Schädlingsbekämpfungszusammensetzung nach einem der Ansprüche 1 bis 6, wobei die Menge an Isodiphenylphosphat in Teilen mindestens gleich der Menge an Wirkstoff ist.

8. Flüssige Schädlingsbekämpfungszusammensetzung nach einem der Ansprüche 1 bis 7, wobei die Menge an Wirkstoff mindestens 60 Gewichtsprozent der Schädlingsbekämpfungszusammensetzung beträgt.

9. Flüssige Schädlingsbekämpfungszusammensetzung nach einem der Ansprüche 1 bis 8, umfassend einen Synergisten, der ausgewählt ist aus der Gruppe bestehend aus Piperonylbutoxid, N-Octylbicyclophepten-dicarboxamid und Gemischen davon.

10. Flüssige Schädlingsbekämpfungszusammensetzung nach einem der Ansprüche 1 bis 9, wobei die Menge an Lsodiphenylphosphat in Teilen mindestens das Doppelte der Menge an Wirkstoff ist.

11. Flüssige Schädlingsbekämpfungszusammensetzung nach einem der Ansprüche 1 bis 10, wobei das Verhältnis von Isodiphenylphosphat zu Wirkstoff 1:1 bis 99:1 beträgt.

12. Flüssige Schädlingsbekämpfungszusammensetzung nach Anspruch 11, umfassend ein synthetisches Pyrethroid und Isodiphenylphosphat, wobei das Verhältnis von Isodiphenylphosphat zu synthetischem Pyrethroid 1:1 bis 99:1 beträgt.

13. Verfahren zur Verringerung der Hautreizung bei warmblütigen Tieren durch einen Schädlingsbekämpfungswirkstoff unter Verwendung der flüssigen Schädlingsbekämpfungszusammensetzung nach einem der Ansprüche 1 bis 12.

14. Verfahren zur Verringerung der Hautreizung bei warmblütigen Tieren durch einen Schädlingsbekämpfungswirkstoff nach Anspruch 13, wobei das Verfahren umfasst:
Mischen eines Schädlingsbekämpfungswirkstoffes und eines Isodiphenylphosphates zur Bildung einer vorgemischten flüssigen Zusammensetzung, wobei das Isodiphenylphosphat die Reizung durch den Wirkstoff verhindert.

15. Verfahren nach Anspruch 14, wobei die Menge an Isodiphenylphosphat in Teilen mindestens gleich der Menge an Wirkstoff ist.

16. Verfahren nach Anspruch 14 oder 15, wobei das Verhältnis von Isodiphenylphosphat zu Wirkstoff 1:1 bis 99:1 beträgt.

17. Verfahren nach einem der Ansprüche 14 bis 16, wobei der Wirkstoff ausgewählt ist aus der Gruppe bestehend aus Pyrethrinen und synthetischen Pyrethroiden.

## Revendications

1. Une composition antiparasitaire liquide comprenant un agent actif antiparasitaire et un phosphate d'isodiphényle dans laquelle le phosphate d'isodiphényle est présent en une proportion efficace pour réduire la paresthésie provoquée par l'agent actif.

2. La composition antiparasitaire liquide selon la revendication 1, comprenant en outre d'autres ingrédients choisis dans le groupe comprenant les solvants organiques, les solvants aqueux et leurs mélanges.

3. Utilisation de la composition antiparasitaire liquide selon la revendication 1 ou 2, pour des traitements par immersion, pulvérisation, traitement localisé ou en émulsion.

4. La composition antiparasitaire liquide selon une quelconque des revendications 1 à 3, dans laquelle l'agent actif est choisi dans le groupe comprenant les pyréthrines, pyréthroïdes naturels, pyréthroïdes synthétiques, carbamates, phosphates, phosphorothioates et leurs mélanges.

5. La composition antiparasitaire liquide selon la revendication 4, dans laquelle l'agent actif est choisi dans le groupe comprenant pyréthrines et pyréthroides synthétiques.

6. La composition antiparasitaire liquide selon une quelconque des revendications 1 à 5, dans laquelle l'agent actif est choisi dans le groupe comprenant les carbaryles, propoxurs, dichlorvos, naled, diazinone, pyréthrine, cyperméthrine, décamethrine, cyhalothrine, flumethrine, cyfluthrine, fenvalérate, deltaméthrine, fempropathrine, fluvalinate, flucythrinate, alphaméthrine, tralométhrine, cycloprothrine, karate, gokilaht, les pyréthroïdes présentant un groupe cyano dans sa structure moléculaire et leurs mélanges.

7. La composition antiparasitaire liquide selon une quelconque des revendications 1 à 6, dans laquelle la quantité de phosphate d'isodiphényle est au moins égale, en parts, à la quantité d'agent actif.

8. La composition antiparasitaire liquide selon une quelconque des revendications 1 à 7, dans laquelle la quantité d'agent actif forme au moins 60% en poids de la composition antiparasitaire.

9. La composition antiparasitaire liquide selon une quelconque des revendications 1 à 8, comprenant un agent à activité synergique choisi dans le groupe comprenant le piperonyl butoxide, le N-octyl bicyclophepténe dicarboximide et leurs mélanges.

10. La composition antiparasitaire liquide selon une quelconque des revendications 1 à 9 dans laquelle la quantité de phosphate d'isodiphényle est au moins le double, en parts, de la quantité d'agent actif.

11. La composition antiparasitaire liquide selon une quelconque des revendications 1 à 10 dans laquelle le rapport phosphate d'isodiphényle/agent actif est compris entre 1/1 et 99/1.

12. Une composition parasitaire selon la revendication 11, comprenant un pyréthroide synthétique et un phosphate d'isodiphényle, dans laquelle le rapport phosphate d'isodiphényle/pyréthroïdes synthétiques est compris entre 1/1 et 99/1.

13. Le procédé de réduction d'irritations de la peau d'animaux à sang chaud dues à un agent actif antiparasitaire, faisant emploi de la composition parasitaire liquide selon une quelconque des revendications 1 à 12.

14. Un procédé de réduction d'irritations de la peau d'animaux à sang chaud dues à un agent actif du point de vue antiparasitaire selon la revendication 13, ce procédé comprenant: le mélange d'un agent antiparasitaire actif et d'un phosphate d'isodiphényle pour former une composition de prémélange liquide dans laquelle le phosphate d'isodiphényle réduit l'irritation due à l'agent actif.

15. Le procédé selon la revendication 14 dans laquelle la quantité de phosphate d'isodiphényle est au moins égale, en parts, à la quantité d'agent actif.

16. Le procédé selon la revendication 14 ou IS dans laquelle le rapport phosphate d'isodiphényle/agent actif est compris entre 1/1 et 99/1.

17. Le procédé selon une quelconque des 14 à 16 dans laquelle l'agent actif est choisi dans le groupe comprenant les pyréthrines et les pyréthroïdes synthétiques.
